# EUROPEAN PATENT APPLICATION

(11) **EP 3 072 851 A1**
(43) Date of publication of application: **28.09.2016**
(21) Application number: 15020048.3
(22) Date of filing: 27.03.2015
(51) Int. Cl.: C01B 31/04, B82Y 30/00, B82Y 40/00

(54) **METHOD OF PRODUCING GRAPHENE**

(71) Applicant: Tata Steel UK Ltd, London SW1P 4WY (GB)
(72) Inventor: The designation of the inventor has not yet been filed
(74) Representative: Blauw, Frans Gerard

(57) **Abstract**

The invention relates to a method for producing graphene, wherein a graphene precursor is dispersed in a liquid to create a suspension of the graphene precursor in the liquid and wherein the suspension of the graphene precursor in the liquid is subjected to at least two different mechanical treatments at the same time.

## Description

### Field of the invention

The invention relates to a method of producing graphene from a graphene precursor using mechanical treatment of the graphene precursor.

### Background of the invention

There are several ways to produce graphene which are basically either along a bottom-up route or a top-down route. Examples of the bottom-up route are the production of graphene by Chemical Vapour Deposition (CVD) and epitaxial growth of graphene on a substrate for example on a Si-C substrate.

With the methods if the bottom-up route it is possible to produce high quality graphene, meaning that the graphene is deposited or grown directly on the substrate layer by layer by subjecting the substrate to a chemical treatment. The drawbacks of these methods are that these are expensive and time consuming and that specific process conditions are required such as high vacuum chambers and/or high process temperatures.

The top-down route is basically the exfoliation of a graphene precursor, wherein the graphene precursor comprises natural graphite or synthetic graphite. The exfoliation method comprises chemical treatment of the graphene precursor, which often includes toxic chemicals. In this method the graphene precursor is first treated with strong oxidants resulting in the forming of graphene oxide. Graphene oxide can be dispersed easily in solvents, including water, and is subsequently subjected to a reducing step by treating the graphene oxide again with chemicals, for instance with hydrazine.

With the exfoliation method also mechanical treatment steps are used next to the chemical treatment, such as milling and sonication of the solution containing graphene oxide. These mechanical treatment steps are often continued for considerable time in order to get sufficient yield, which will result in a reduction in the size of the graphene flakes, a critical parameter in several applications of graphene. Further, it may also give rise to broken-conjugation areas in graphene, so-called graphene atomic- or point-defects, which will affect the electronic properties of graphene.

This exfoliation method requires a number of subsequent processing steps which makes this also a time consuming method. If such a method is to be carried out on an industrial scale the chemicals needed would be substantial, requiring adequate safety and environmental measures. The quality of the graphene resulting from this exfoliation method can be substantially less than the quality of the graphene resulting from the method according to the bottom-up route.

### Objectives of the invention

It is an objective of the present invention to provide a method of producing graphene by applying substantially mechanical treatment steps to graphene precursor.

It is another objective of the present invention to provide a method of producing graphene wherein graphene is produced in a short time.

It is another objective of the present invention to provide a method of producing graphene wherein the resulting graphene has a high content of single layer graphene or stacked graphene layers of 3 layers or less.

It is another objective of the present invention to provide a method of producing graphene wherein the graphene is produced against low costs.

It is still another objective of the present invention to provide a method of producing graphene which is free from using strong and/or toxic chemicals.

### Description of the invention

According to a first aspect of the invention one or more of the objectives of the invention are realized by providing a method for producing graphene, which comprises the steps of:
- dispersing a graphene precursor in a liquid to create a suspension of the graphene precursor in the liquid,
- subjecting the graphene precursor suspended in the liquid to a mechanical treatment,
- separating graphene from the suspension,
wherein the mechanical treatment comprises that the graphene precursor suspended in the liquid is subjected to at least two different mechanical treatments at the same time.

In the context of the present invention the term "graphene precursor" shall mean a solution or compound comprising natural graphite or synthetic graphite. In the context of the present invention the term "graphene" shall refer to single layer graphene as well as to multilayer stacks of graphene comprising 20 layers or less of graphene, unless indicated differently.

By subjecting the graphene precursor to at least two different mechanical treatments at the same time the time needed to produce graphene is considerable reduced in comparison to the usual method wherein mechanical and chemical treatment steps are carried out subsequently. In other production methods milling times of 24 hours and more are necessary whereas with the method according the invention the time needed to carry out the method is less than 3 hours. Moreover the graphene produced according to the method shows a high yield of single and bilayer graphene.

According to a further aspect of the invention it is provided that the mechanical treatment comprises a mixing operation and sonication operation.

Preferably the milling operation is a high shear mixing operation. This milling operation is carried out with high shear mixers which operate at speeds in the order of 6000 - 9000 rpm.

The sonication operation is preferably a ultrasonication operation wherein the liquid with the graphene precursor in suspension is subjected to ultrasonic waves of 20 kHz and more. The sound waves propagating through the liquid generate compression and rarefaction cycles, the rarefaction creating voids which collapse during compression. With the invention the frequency of the ultrasonication is in the range of 30 - 60 kHz, more preferably in the range of 40 - 50 kHz.

According to a further aspect of the invention it is provided that the liquid with the graphene precursor in suspension is cooled. Preferably the temperature of the liquid with the graphene precursor in suspension is cooled to a temperature below 100°C. More preferably the temperature of the liquid with the graphene precursor in suspension is kept in a range between 0 - 50°C, and even more preferably to about room temperature in a range between 15 - 35°C.

It is further provided that the method includes the addition of a surfactant to the liquid with the graphene precursor. According to a further aspect of the invention the liquid is water and the surfactant is a water soluble surfactant.

The surfactant is a tetra butyl ammonium surfactant or an alkylol ammonium surfactant. Good results were obtained with ANTI-TERRA^{®}-250, a solution of an alkylol ammonium salt of a higher molecular weight acidic polymer, a surfactant supplied by BYK Chemie GmbH.

The surfactant is preferably added in a concentration of 0.1 - 10.0 mg/ml, preferably 0.2 - 5.0 mg/ml.

The method according to the invention is suitable to be carried out batch-wise, but it is also possible to carry out the method in a continuous or semi-continuous process.

### Brief description of the drawings

The invention will be further explained on hand of the example shown in the drawing, in which:
fig.1 shows schematically a device to apply the method for producing graphene,
fig.2 shows a Raman diagram of the produced graphene, and
fig.3 shows a TEM image and an electron diffraction diagram of the produced graphene.

### Detailed description of the drawings

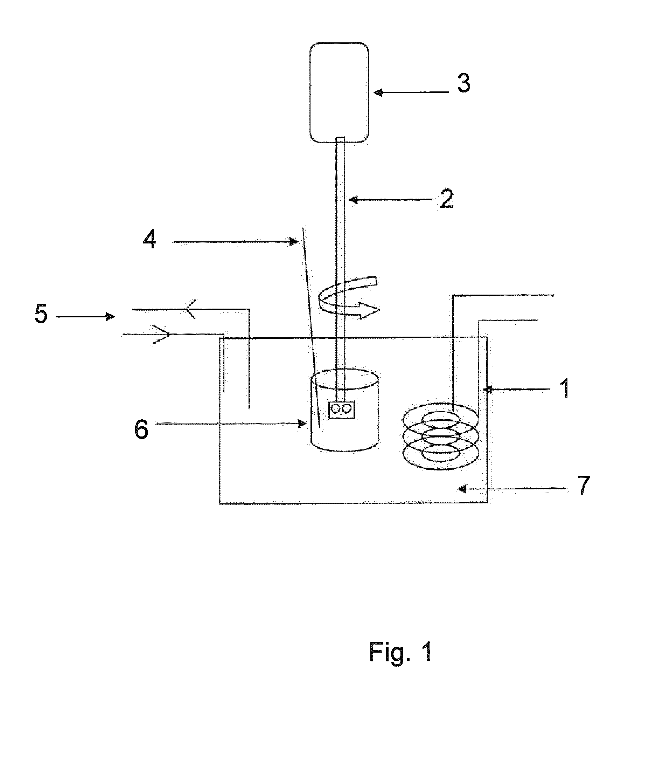

In fig. 1 a device for applying the method is shown comprising a vessel with a cooling liquid and a pipe system 5 for the supply and drainage of the cooling liquid from the vessel. The temperature of the cooling liquid is measured with a probe 1 and the temperature data is used to control the supply and drainage of the cooling liquid. With water as a cooling liquid the temperature can be controlled adequately.

In the vessel a sample cup 6 is placed containing the liquid with the graphene precursor in suspension. A high shear mixer 2 is provided extending with the shear generating element in the liquid with the graphene precursor in suspension. The shear mixer is provided with a speed controller unit 3 with which the speed of the mixture can be adjusted.

A further temperature measuring probe 4 is immersed in the liquid with the graphene precursor in suspension and is also used to control the temperature of the cooling liquid contained in the vessel.

A ultrasonicator 7 is immersed in the cooling liquid. By operating the ultrasonicator the liquid with the graphene precursor in suspension in sample cup 6 is subjected to the sound waves propagating from ultrasonicator 7.

In various tests of the method high shear mixers of Silverson^{®} and Ross^{®} were used. High shear mixing was done in the range of 6000-9000 rpm. Good results were obtained with high shear mixing at about 7000 rpm. High viscosity was mainted during the exfoliation of the graphene precursor by adding more water to the suspension. The viscosity was frequently measured with a viscosity paint cup. In these test ultrasonication power was mainted during the process of exfoliation.

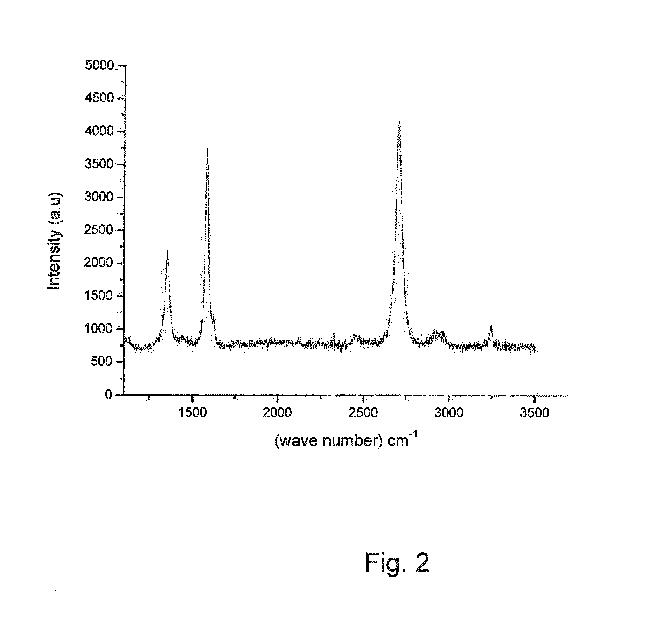

In fig. 2 a Raman spectrum of a graphene sample obtained by the method according the invention. The Raman measurements were performed at room temperature with a Renishaw spectrometer at 514nm, with notch filters cutting at 100 cm-1. The vertical axis shows the intensity of the scattered Raman signal and the horizontal axis shows the Raman shift in cm-1 when excited by a laser radiation with a wavelength of 514 nm. The principle peaks observed in the graphene Raman spectrum are the D, G and 2D peaks at 1350 cm-1, 1580 cm-1 and 2700 cm-1 respectively. The spectrum above indicates that the synthesized material contains a high content of monolayer graphene as indicated by the very symmetrical 2D peak with a Lorentzian profile centred at 2692 cm-1.

With an increasing number of graphene layers the intensity of the 2D peak will reduce compared to the G peak. Another variation in the Raman spectrum with the increase in the number of graphene layers is the shifting of the 2D peak position to higher wave numbers (cm-1). The low D peak indicates that the graphene has lower defects. The results were derived from 15 spectra at 5 different points.

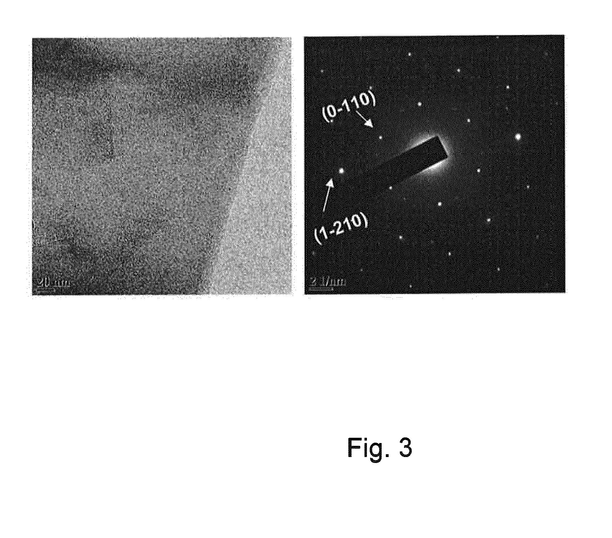

The image to the left in fig. 3 shows a transmission electron micrograph of a graphene flake. The image to the right is an electron diffraction pattern obtained from the same sample. It shows the typical six-fold symmetry expected for graphene and graphite. The electron diffraction spots are labelled using Miller-Bravais indices (hkil). The ratio of identified peak intensities of 0th order and 1st order spots is indicative of single or bilayer graphene depending on the area under the electron beam.

Ultraviolet visible absorption spectra of the test shows the concentration of final graphene based suspension (after sonication, centrifuging at 1000rpm for 1 hr and separating the supernatant) in the range of 0.063 - 0.11 mg/ltr which is much higher than values reported in literature.

## Claims

1. Method for producing graphene, which comprises the steps of:
- dispersing a graphene precursor in a liquid to create a suspension of the graphene precursor in the liquid,
- subjecting the graphene precursor suspended in the liquid to a mechanical treatment,
- separating graphene from the suspension,
wherein the mechanical treatment comprises that the graphene precursor suspended in the liquid is subjected to at least two different mechanical treatments at the same time.

2. Method according to claim 1, wherein the mechanical treatment comprises a mixing operation and sonication operation.

3. Method according to claim 2, wherein the milling operation is a high shear mixing operation.

4. Method according to claim 2 or 3, wherein the sonication operation is a ultrasonication operation.

5. Method according to claim 4, wherein the frequency of the ultrasonication is in the range of 30 - 60 kHz, more preferably in the range of 40 -50 kHz

6. Method according to any of the preceding claims, wherein the liquid with the graphene precursor in suspension is cooled.

7. Method according to claim 6, wherein the temperature of the liquid with the graphene precursor in suspension is cooled to a temperature below 100°C.

8. Method according to claim 6 or 7, wherein the temperature of the liquid with the graphene precursor in suspension is kept in a range between 0 - 50°C, preferably in a range between 15 - 35°C.

9. Method according to any of the preceding claims, wherein a surfactant is added to the liquid with the graphene precursor.

10. Method according to claim 9, wherein the liquid is water and the surfactant is a water soluble surfactant.

11. Method according to claim 10, wherein the surfactant is a tetra butyl ammonium surfactant or an alkylol ammonium surfactant.

12. Method according to claim 11, wherein the surfactant is added in a concentration of 0.1 - 10.0 mg/ml, preferably 0.2 - 5.0 mg/ml.

13. Method according to any of the preceding claims, wherein the method is applied batch-wise.
